# EUROPÄISCHE PATENTSCHRIFT

(11) **EP 0 401 556 B1**
(45) Veröffentlichungstag und Bekanntmachung des Hinweises auf die Patenterteilung: **09.03.1994**
(21) Anmeldenummer: 90109099.3
(22) Anmeldetag: 15.05.1990
(51) Int. Cl.: H02G 3/00, H02G 3/04, H02B 1/044

(54) **Einbaudose für die Anbringung von Einbaugeräten, vorzugsweise von elektrischen Einbaugeräten**
Installation casing for installating equipment, in particular electrical equipment
Boîtier encastré pour l'installation des appareils encastrés, en particulier des appareils électriques

(30) Priorität: 24.05.1989 DE 3916825; 24.05.1989 DE 8906395 U
(43) Veröffentlichungstag der Anmeldung: 12.12.1990
(73) Patentinhaber: Zumtobel Licht GmbH, D-61250 Usingen (DE)
(72) Erfinder: Gujènas, Stanislaus, D-6093 Flörsheim 4 (DE)
(74) Vertreter: Fuchs Mehler Weiss

(56) Entgegenhaltungen:
- AT-B- 360 609
- DE-A- 2 248 136
- FR-A- 1 573 155
- FR-A- 1 590 816
- FR-A- 2 614 736
- US-A- 3 412 225

## Beschreibung

Die Erfindung betrifft eine Einbaudose für die Anbringung von Einbaugeräten, vorzugsweise Einbaugeräten elektrischer Art, hinter einer dünnen, plattenförmigen Aufnahmewand, wobei die Einbaudose mit dem eingesetzten Einbaugerät an der Sichtseite der Aufnahmewand mit einer den Zugriff zu dem Einbaugerät enthaltenden, äußeren Abschlußplatte abdeckbar sowie das Einbaugerät an hinter der Aufnahmewand, beispielsweise hinter der Außenwand einer kanalartigen Anschlußeinrichtung verlegte Leitungen anschließbar ist.

Die Erfindung betrifft auch eine Einrichtung für die Anbringung von Einbaugeräten, vorzugsweise Einbaugeräten elektrischer Art in kanalartigen Anschlußeinrichtungen für verschiedenartige Versorgungssysteme, wobei eine Einbaudose der oben angegebenen Art anzuwenden ist.

In der elektrischen Installationstechnik sind Einbaudosen verschiedenster Art bekannt, die in Wänden oder Hohlräumen hinter Wandoberflächen zu befestigen sind. Erst wenn solche Einbaudosen in Gebäuden und dgl. montiert und die elektrischen Leitungen eingezogen sind, erfolgt die Bestückung mit den Einbaugeräten.

Ein typisches Beispiel für in Wände eingebaute Einbaudosen gibt die FR-A-1 590 816. Die Dose wird vollständig vom Wandaufbau umgeben und so fixiert. In die Einbaudose wird, zusammen mit einem Blendrahmen, ein Einbaugerät eingesetzt. Der vorgeschlagene Aufbau erlaubt nicht, Einbaudose und -gerät als Einheit auszubauen bzw. auszutauschen, da die Einbaudose fest mit der Wand verbunden ist.

Andererseits ist aus DE-OS 16 90 170 und DE-OS 17 90 154 bekannt, Einbaugeräte in kanalartigen Anschlußeinrichtungen in einem Innenraum einer die Wandung der kanalartigen Anschlußeinrichtung bildenden Profilschiene an der Innenseite der einen oder anderen Profilwand fest zu montieren. DE-OS 16 90 170 betrifft in erster Linie eine derartige Montageweise für elektrische Einbaugeräte, während DE-OS 17 90 154 die Montage von Einbaugeräten für fließfähige Medien (gasförmig und/oder flüssig) im Inneren von kanalartigen Anschlußeinrichtungen zum Gegenstand hat. Durch die feste Montage der Einbaugeräte an der Innenseite der Profilwandung sind das Auswechseln von Einbaugeräten und der nachträgliche Einbau von Einbaugeräten stark erschwert. Aber auch bereits die Erstmontage in der bekannten Weise ist aufwendig an Kosten und Montagezeit.

Es ist deshalb Aufgabe der Erfindung, eine verbesserte Einbaudose für die Anbringung von Einbaugeräten zu schaffen, mit der das Befestigen des jeweiligen Einbaugerätes in einer Aufnahmewand, das Anschließen des Einbaugerätes an hinter der Aufnahmewand geführte Ver- bzw. Entsorgungsleitungen des jeweiligen Systems und das Auswechseln von Einbaugeräten wesentlich erleichtert werden. Dabei soll die zu schaffende Einbaudose für Einbaugeräte verschiedenster Art in praktisch gleicher Weise einsetzbar sein.

Diese Aufgabe wird erfindungsgemäß durch die Ausbildung der Einbaudose zum Einführen von der Sichtseite der Aufnahmewand her in eine Aufnahmeöffnung in der Aufnahmewand, vorzugsweise an der Unterseite und/oder Frontseite einer Anschlußeinrichtung gelöst, wobei die Einbaudose an der jeweiligen Aufnahmewand einrastbare Haltenasen mit auf die Hinterseite der Aufnahmewand greifender Rast- und Abstützfläche und einen mit einem Halterahmen überdeckbaren Öffnungsrand aufweist, der zum Abstützen des Halterahmens in festgelegtem Abstand von der dem Öffnungsrand zugewandten Rast- und Abstützfläche der Haltenasen ausgebildet ist.

Die erfindungsgemäße Einbaudose ist vorgesehen für die Anbringung in einer mehr oder weniger plattenförmigen Aufnahmewand, beispielsweise Paneelwand oder in der Wandung einer Profilschiene. Dabei läßt sich die erfindungsgemäße Einbaudose von Fall zu Fall wahlweise leer in die jeweilige Aufnahmeöffnung montieren und nachträglich bestücken oder auch vorher zur Bildung einer Einbaueinheit mit dem jeweiligen Einbaugerät bestücken und dann in die Aufnahmeöffnung der Aufnahmewand montieren. Während im ersten Anwendungsfall elektrische oder sonstige Leitungen eines hinter der Auf nahmewand verlegten Leitungssystems bei der Montage der leeren Einbaudose in diese zu ziehen sind, können beim Vormontieren einer Einbaueinheit die zum Anschließen des Einbaugerätes erforderlichen Anschlußstücke bereits an der vormontierten Einbaueinheit angebracht werden, so daß keinerlei Eingriff in die vormontierte Einbaueinheit für das Anschließen an die jeweiligen Ver- und Entsorgungsleitungen mehr notwendig ist.

Insgesamt werden durch die erfindungsgemäße Einbaudose Montage und Anschluß von Einbaugeräten denkbar einfach und schnell durchführbar. Auch das Auswechseln eines Einbaugerätes ist mittels der erfindungsgemäßen Einbaudose besonders einfach, da nach dem Lösen der Anschlüsse an den Ver- und Entsorgungsleitungen lediglich die Verrastung der Einbaudose in der Wandöffnung zu Lösen und das auszuwechselnde Einbaugerät zusammen mit der Einbaudose als Einheit aus der Wandöffnung herauszunehmen und durch eine andere mittels einer erfindungsgemäßen Einbaudose vormontierte andere Einbaueinheit zu ersetzen.

Vor allem wird durch die mit der erfindungsgemäßen Einbaudose geschaffene Möglichkeit der Bildung einer vormontierten Einbaueinheit eine schützende Verkapselung des einzusetzenden oder auszutauschenden Einbaugerätes geschaffen, so daß außer einem wirksamen Schutz des Einbaugerätes selbst bei Einbau und Ausbau auch noch erhöhte Arbeitssicherheit erreicht wird.

Die erfindungsgemäße Einbaudose eignet sich für Einbaugeräte der verschiedensten Art. Hierzu kommen Starkstrom-Einbaugeräte in Betracht, wie beispielsweise Starkstrom-Schalt- und Anschlußgeräte, Schutzkontakt-Steckdosen, Sondersteckdosen, Potentialausgleich-Steckdosen, Starkstromschalter, Dimmer, Tast- und Steuergeräte, Schutzeinrichtungen, Schaltuhren usw.. Ferner kommt die erfindungsgemäße Einbaudose auch für die verbesserte Anbringung von Kommunikationsgeräten in Betracht, beispielsweise für Lichtruf-Steckdosen, Telefonsteckdosen, Steckdosen für Datenverarbeitung, Steuer- und Sprecheinrichtungen, Dosen für Lichtsignale, Schaltuhren und ähnliche Geräte, Antennensteckdosen usw.. Darüberhinaus ist die erfindungsgemäße Einbaudose auch zur Anbringung von Einbaugeräten für Flüssigkeitssysteme, Gassysteme usw. geeignet.

Insgesamt zeichnet sich die erfindungsgemäße Einbaudose dabei dadurch besonders aus, daß bei praktisch gleicher Ausbildung die verschiedenartigsten Einbaugeräte montierbar sind, wobei die Einbaudose für die Ausbildung der Aufnahmeöffnung in der Aufnahmewand maßgeblich ist. Dies bedeutet, daß auch durchaus möglich ist, eine bisher mittels einer erfindungsgemäßen Einbaudose eingesetzte Einbaueinheit durch eine solche mittels einer erfindungsgemäßen Einbaudose vormontierte Einbaueinheit zu ersetzen, die ein Einbaugerät für ein völlig anderes System enthält. Beispielsweise kann eine mittels erfindungsgemäßer Einbaudose gebildete Einbaueinheit mit einem Starkstrom-Einbaugerät durchaus durch eine mittels einer erfindungsgemäßen Einbaudose gebildete Einbaueinheit mit Schwachstromeinbaugerät oder Kommunikations-Einbaugerät oder umgekehrt ersetzt werden. Es ist sogar denkbar, daß eine mittels erfindungsgemäßer Einbaudose gebildete Einbaueinheit mit elektrischem Einbaugerät durch eine mittels erfindungsgemäßer Einbaudose vormontierte Einbaueinheit ersetzt werden kann, die ein Einbaugerät für flüssige oder gasförmige Medien enthält.

Um das Arretieren der erfindungsgemäßen Einbaudose in der Wandöffnung zu verbessern und zu erleichtern, können in Weiterbildung der Erfindung die Haltenasen mit auswärts abgeschrägter Rast- und Abstützfläche ausgebildet sein. Hierdurch sind die Haltenasen in der Lage, zusätzlich zum Verrasten auch eine Verkeilungswirkung an dem Öffnungsrand der Aufnahmewand hervorzurufen, so daß sich mit dem Verrasten zugleich ein fester sicherer Halt der Einbaudose in der Wandöffnung ergibt, wobei Schwankungen in der Wanddicke innerhalb relativ breiter Toleranzen von den Haltenasen ohne weiteres ausgeglichen werden.

In einer besonders vorteilhaften Ausführungsform sind an der Einbaudose die Haltenasen gegenüber dem Öffnungsrand zum Dosenboden hin zurückversetzt an der Umfangswand angeordnet und am Öffnungsrand den Haltenasen gegenübergesetzte und sich unter den Halterahmen des Einbaugerätes legende Flanschteile angebracht, wobei zwischen diesen Flanschteilen und der Rast- und Abstützfläche der Haltenasen der in Betracht kommenden Dicke der Aufnahmewand entsprechender Abstand gebildet ist. In dieser Ausführungsform wird der Öffnungsrand in der Aufnahmewand zwischen den Haltenasen und den Flanschteilen an der Einbaudose gefaßt und dadurch ein besonders sicherer, fester Halt der Einbaudose bzw. der durch die Einbaudose und das in diese eingebaute Einbaugerät gebildeten Einbaueinheit der Wandöffnung erreicht. Dabei können die Flanschteile sich - mit Aussparung der Bereiche der Haltenasen - um den gesamten Öffnungsrand der Einbaudose erstrecken und somit ringsum eine sichere Auflage auf der Außenseite der Aufnahmewand an dem Öffnungsrand bilden. Die Flanschteile können bevorzugt als auf einen Bruchteil der Umfangswand-Dicke verdünnte, nach außen vorstehende Randelemente an der Umfangswand der Einbaudose angeformt sein.

In besonders vorteilhafter Weiterbildung der Erfindung kann die Einbaudose im Bodenbereich ihrer Umfangswand und/oder in ihrer Bodenwand ausbrechbare oder ausschneidbare Wandteile als vorbereitete Durchlaßöffnungen für Anschlußleitungen aufweisen. Durch die Anordnung dieser vorbereiteten Durchlaßöffnungen im Bodenbereich oder in der Bodenwand der Einbaudose können bei mit erfindungsgemäßen Einbaudosen vorgefertigten Einbaueinheiten bereits an dem Einbaugerät angebrachte Anschlußstücke zum Einführen der Einbaueinheit in die Wandöffnung derart elastisch verformt werden, daß diese Anschlußstücke das einführen einer solchen Einbaueinheit in die Wandöffnung auch dann nicht behindern, wenn die Wandöffnung sehr eng passend auf die Querschnittsfläche der Einbaudose abgestimmt ist.

Die vorgebildeten Durchlaßöffnungen können als auf einen Bruchteil der Wanddicke der Einbaudose verdünnte Wandbereiche ausgebildet sein. Die tatsächlich auszubildenden Durchlaßöffnungen können in diesen verdünnten Wandungsbereichen je nach Wunsch enger oder breiter ausgebildet werden.

Bevorzugt ist die Einbaudose gemäß der Erfindung mit polygonalem, vorzugsweise quadratischem oder rechteckigem Querschnitt ausgebildet. Durch die polygonale Querschnittsausbildung läßt sich eine genaue Einbaulage der Einbaudose definieren. Die Einbaudose kann bevorzugt einstückig mit ihren Haltenasen aus nachgiebigem Kunststoff, vorzugsweise flammwidrigem Polypropylen geformt sein. Die Haltenasen sind dadurch mit einer gewissen Elastizität an der Wand der Einbaudose gebildet. Man wird in dieser Ausführungsform der Erfindung die Haltenasen derart anformen, daß sie unter dieser Elastizität nach auswärts in die Verriegelungsstellung gedrückt werden. Es ist aber auch denkbar, die Haltenasen mit Federn auszustatten, die dazu dienen, die Haltenase in die Verriegelungsstellung zu drücken. Im allgemeinen sind aber derartige zusätzliche Verriegelungsfedern nicht erforderlich.

Bei Ausbildung der Einbaudose aus nachgiebigem Kunststoff empfiehlt es sich ferner, daß an für Schraubverbindungen vorgesehenen Stellen der Einbaudose vorbereitete Schraubverbindungslöcher zum Einschrauben von Schraubenbolzen mit selbstschneidendem Gewinde vorgesehen sind. Sollten jedoch höhere Anforderungen an die Schraubverbindungen gestellt werden, so können auch an für Schraubverbindungen vorgesehenen Stellen der Einbaudose Gewindebuchsen aus Metall beim Formen in die Wandungen eingelagert sein.

Die Erfindung schafft auch eine verbesserte Einrichtung für die Anbringung von Einbaugeräten, vorzugsweise Einbaugeräten elektrischer Art, in kanalartigen Anschlußeinrichtungen für verschiedenartige Versorgungssysteme, wobei eine Einbaudose der oben angegebenen Art anzuwenden ist. Mit dieser verbesserten Einrichtung für die Anbringung von Einbaugeräten soll vor allem das Befestigen des jeweiligen Einbaugerätes in einer Wand der kanalartigen Anschlußeinrichtung erleichtert und das Anschließen des Einbaugerätes an hinter der Wand der Anschlußeinrichtung geführte Ver- bzw. Entsorgungsleitungen des jeweiligen Systems und das Auswechseln von Einbaugeräten wesentlich erleichtert werden.

Die erfindungsgemäße Einrichtung für die Anbringung von Einbaugeräten kennzeichnet sich durch eine mit der Einbaudose und einem Einbaugerät gebildete Einbaueinheit, die in eine Aufnahmeöffnung in einer Außenwand, vorzugsweise an der Unterseite und/oder in der Frontwand, der Anschlußeinrichtung von der Außenseite her einsetzbar ist und bei der die Einbaudose an der Innenseite der jeweiligen Außenwand einrastbare Haltenasen aufweist und zumindest am Einbaugerät ein über die Außenseite der jeweiligen Außenwand der Anschlußeinrichtung greifende Halterahmen vorgesehen ist, der mit einer den äußeren Zugriff zum Einbaugerät enthaltenden, äußeren Abdeckplatte überdeckbar ist. Die erfindungsgemäße Anbringungseinrichtung eignet sich für Einbaugeräte der verschiedensten Art. Sie bietet erhebliche Erleichterungen für die Montage und den Anschluß des Einbaugerätes sowie auch wesentlich vereinfachte Möglichkeiten für das Auswechseln von Einbaugeräten. Besonders vorteilhaft ist es für die erfindungsgemäße Einrichtung für das hnbringen von Einbaugeräten, wenn die Einbaudose und das Einbaugerät zu einer Einbaueinheit vormontiert sind, bei der Anschlußstücke des Einbaugerätes durch Öffnungen im Bodenbereich der Einbaudose hindurchgeführt und an die in der Anschlußeinrichtung verlegten Leitungen anschließbar sind.

Ein Ausführungsbeispiel der Erfindung wird im folgenden anhand der Zeichnung näher erläutert. Es zeigen:
- Figur 1: Eine Draufsicht auf eine erfindungsgemäße Einbaudose;
- Figur 2: die Einbaudose gemäß Figur 1 in Seitenansicht entsprechend der in Figur 1 angedeuteten Blickrichtung 2-2;
- Figur 3: eine mittels einer erfindungsgemäßen Einbaudose einbaufertig vorbereitete Einbaueinheit am Beispiel einer Schutzkontaktsteckdose und
- Figur 4: eine kanalartige Anschlußeinrichtung mit einem mittels erfindungsgemäßer Einbaudose eingebautem Einbaugerät in Form einer potentialausgleichdose, wobei die Einbaueinheit der potentialausgleichdose entsprechend der in Figur 1 angedeuteten Linie 4-4 geschnitten ist.

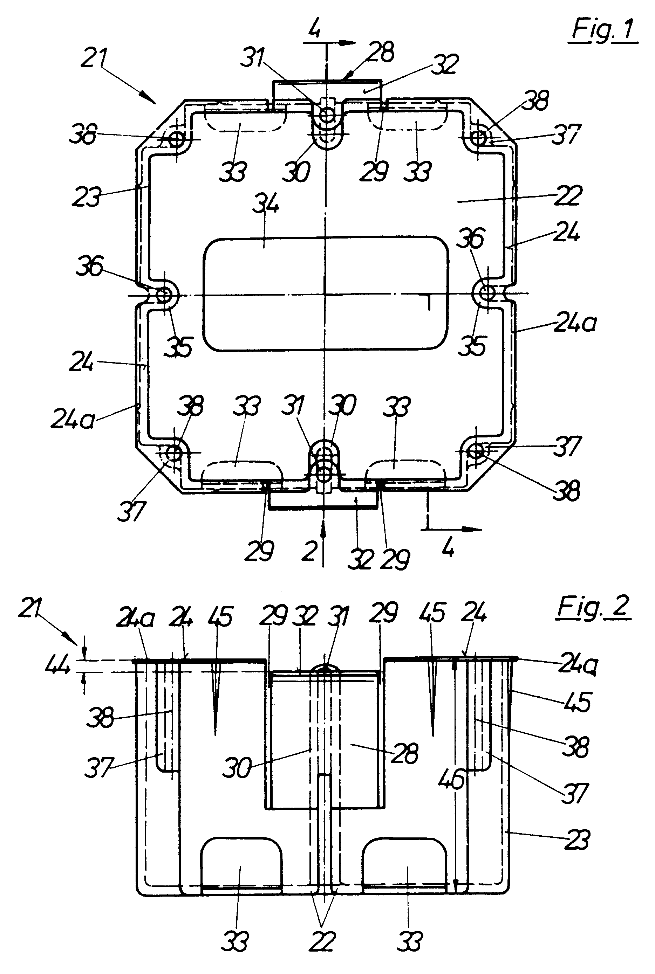

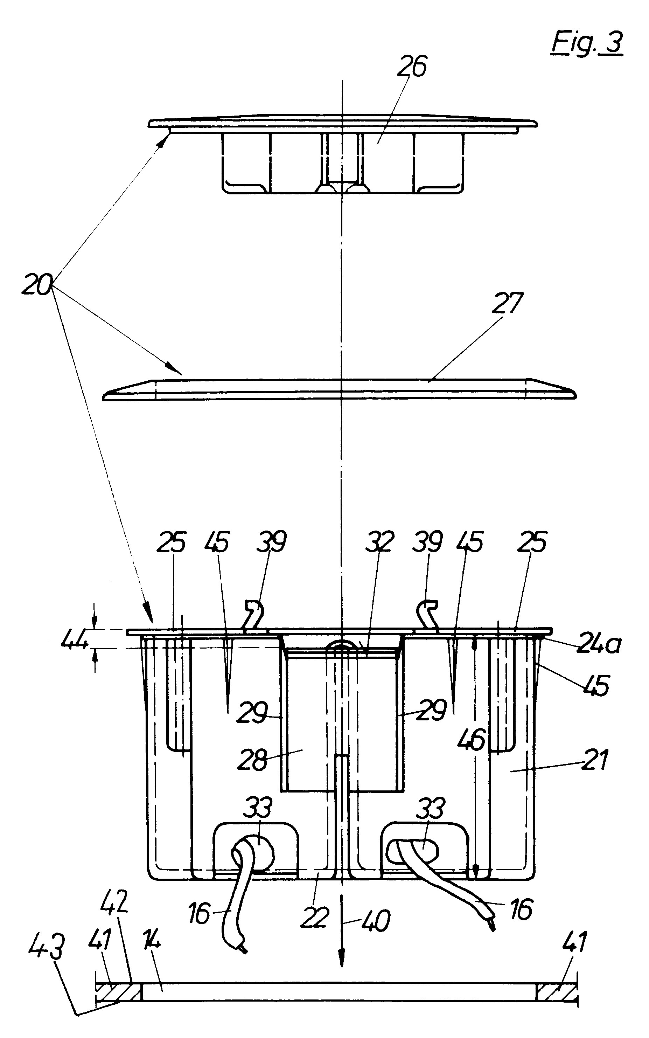

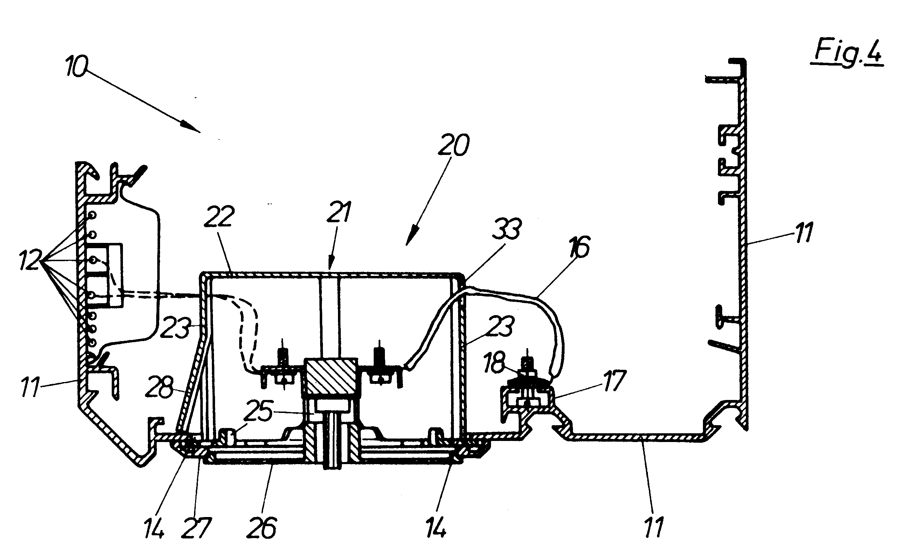

Wie aus den Figuren 1 bis 3 ersichtlich, ist eine Einbaudose 21 vorgesehen, die im dargestellten Beispiel im wesentlichen quadratischen Querschnitt aufweist. Die Einbaudose 21 ist einstückig mit Bodenwand 22 und Umfangswand 23 aus nachgiebigem, elektrisch isolierendem Kunststoff, beispielsweise flammwidrigem Polypropylen, hergestellt. An zwei sich gegenüberliegenden Seiten ist in die Umfangswand 23 je eine Haltenase 28 eingeformt, die in ihrem unverspannten Ruhezustand gegenüber der Außenfläche der Umfangswand 23 vorsteht, wie dies besonders aus Figur 1 ersichtlich ist. Jede der Haltenasen 28 ist zu beiden Seiten mit je einem Schlitz 29 gegenüber dem oberen Teil der Umfangswand 23 abgetrennt und geht im unteren Teil in die Umfangswand 23 über. An der Innenseite trägt jede Haltenase eine Rippe 30, die mit einer Längsbohrung zur Aufnahme einer Halteschraube versehen ist. Diese Rippe 30 dient einerseits zur Versteifung der Haltenase 28. Dadurch erhält die Haltenase 28 einen festen Verrastungssitz hinter der Aufnahmewand 41. Für Anwendungsfälle, bei denen die Einbaudose nicht mittels der Haltenasen verrastet werden soll, können die Haltenasen 28 in einwärts gebogenem Zustand mit dem Halterahmen 25 eines Einbaugerätes 15 verschraubt werden. Um ein besseres Verrasten der Haltenasen hinter der Aufnahme 41 zu erreichen, sind die Haltenasen 28 mit der offenen Seite der Einbaudose 21 zugewandten auswärts abgeschrägten Rast- und Abstützflächen 32 ausgebildet. Die Haltenasen 28 sind mit diesen abgeschrägten Rast- und Abstützfläche 32 gegenüber dem Öffnungsrand 24 der Einbaudose 21 zu dem Dosenboden 22 hin um einen Abstand 44 zurückversetzt, wie dies besonders aus den Figuren 2 und 3 ersichtlich ist. Der Öffnungsrand 24 der Einbaudose 21 ist mit sich nach außen erstreckenden Flanschteilen 24a ausgebildet, die jedoch nur einen Bruchteil der Dicke der Umfangswand 23 dick sind und als nach außen vorstehende Randelemente an die Umfangswand 23 der Einbaudose 21 angeformt sind. Im Bereich der Haltenasen 28 sind die Flanschteile 24a ausgespart, während sie sich im übrigen um den gesamten Öffnungsrand der Einbaudose 21 erstrecken.

Im Bodenbereich, d.h. im unteren Teil der Umfangswand 23 bis hinein in die Bodenwand 22 ist die Einbaudose 21 mit ausbrechbaren oder ausschneidbaren Wandteilen als vorbereite Durchlaßöffnungen 33 für Anschluß-Leitungsstücke 16 ausgebildet. Die vorgebildeten Durchlaßöffnungen 33 sind im dargestellten Beispiel als auf einen Bruchteil der Wandungsdicke der Einbaudose 21 verdünnte Wandbereiche ausgebildet. Ein solcher verdünnter Wandbereich 34 gemäß Figur 1 auch in der Bodenwand 22 der Einbaudose 21 angebracht.
Für Schraubverbindungen, insbesondere zum Befestigen von Einbaugeräten 15 weist die Einbaudose 21 auch an denjenigen Teilen der Umfangswand 23, die keine Haltenasen 28 tragen, nach innen vorstehende Versteifungsrippen 35 auf, in welchen Längsbohrungen 36 angebracht sind. Ahnliche Versteifungsrippen 37 mit Längsbohrungen 38 sind auch in den Eckbereichen der Umfangswand 23 angebracht, wobei die letzteren Versteifungsrippen 23 von der Öffnungsseite der Einbaudose 21 her sich nur bis in etwa die Hälfte der Dosentiefe 46 erstrecken. Die in den Rippen 30, 35, 37 angebrachten Längsbohrungen 31, 36, 38 sind im dargestellten Beispiel als einfache Schraubverbindungslöcher in dem Kunststoff ausgebildet, in die Schraubenbolzen mit selbstschneidendem Gewinde eingedreht werden können. Für spezielle Forderungen können auch an für Schraubverbindungen vorgesehenen Stellen der Einbaudose 21 anstelle dieser Löcher 31, 36, 38 oder anstelle eines Teiles dieser Löcher Gewindebuchsen aus Metall beim Formen in die Umfangswand 23 eingelagert sein.

Figur 3 zeigt die in eine Aufnahmeöffnung 14 in einer Aufnahmewand 41, beispielsweise die Außenwand einer Anschlußeinrichtung, einsetzbare Einbaueinheit 20 mit Einbaudose und eingebautem Einbaugerät, von welchem in Figur 3 nur die Schutzkontakte 39 einer Schutzkontaktsteckdose sichtbar sind. Aus zwei teilweise ausgebrochenen Durchlaßöffnungen 33 sind Anschluß-Leitungsstücke 16 herausgeführt, an der Oberseite der Einbaueinheit 20 liegt der Halterahmen 25 unmittelbar auf den Flanschteilen 32 am Öffnungsrand der Einbaudose 21. Zum Anbringen der Einbaueinheit 20 wird die mit dem Einbaugerät Einbaudose oder überhaupt nur die leere, später zu bestückende Einbaudose 21 im Sinne des Pfeiles 40 von der Sichtseite 42 der Aufnahmewand 41 her in die Aufnahmeöffnung 14 eingeschoben, bis sich die Flanschteile 32 auf die Außenfläche der Aufnahmewand 41 legen und die Rastnasen 28 am Rand der Aufnahmeöffnung 14 über die Hinterseite 43 der Aufnahmewand 41 greifen. Auf der Außenseite der Umfangswand 23 weist die Einbaudose 21 angeformte Führungs- und Klemmrippen 45 auf, die sich vom Öffnungsrand 24 der Einbaudose 21 her nach dem Dosenboden 22 hin zumindest über einen Teil der Dosentiefe 46 erstrecken. Diese Führungs- und Klemmrippen haben im wesentlichen dreieckigen, von dem Öffnungsrand 24 nach dem Dosenboden 22 hin kleiner werdenden Querschnitt, aber an dem dem Öffnungsrand 24 zugewandten Ende noch kleinere Dicke als die Breite der Flanschteile 32. Beim Einschieben der Einbaudose 21 in die Aufnahmeöffnung 14 kommen die Führungs- und Klemmrippen 45 mit dem Rand der Aufnahmeöffnung 14 in Berührung. Besteht die Aufnahmewand 41 aus weichem Material, so drücken sich die Führungs- und Klemmrippen 45 in den Umfangsrand derAufnahmeöffnung 14 ein. Besteht dagegen die Aufnahmewand 41 aus hartem Material (wie dies bevorzugt der Fall ist), beispielsweise Metall, dann können sich beim weiteren Einschieben der Einbaudose 21 in die Aufnahmeöffnung 14 überstehende Teile der Führungs- und Klemmrippen 45 am Umfangsrand der Aufnahmeöffnung 14 abschaben. Auf jeden Fall wird bei vollständig in die Aufnahmeöffnung 14 eingesetzter Einbaudose 21 ein genau passender und fester Sitz in der Aufnahmeöffnung 14 gewährleistet, der auch geringfügige Bewegungen der Einbaudose 21 bezüglich der Aufnahmewand 41 nicht zuläßt.

Nach erfolgtem vollständigem Einschieben der Einbaudose 21 in die Aufnahmeöffnung 14 und Ausspreizen der Haltenasen 28 an der Hinterseite 43 der Aufnahmewand 41 kann noch die Einbaudose 21 mit einem Einbaugerät bestückt werden, falls dies aus irgendwelchen Gründen nicht vorher geschehen ist. Die vollständig in die Aufnahmeöffnung 14 eingeschobene und mit einem Einbaugerät bestückte Einbaudose 21 wird dann mit einem Abdeckrahmen 27 versehen, der auf die Sichtseite 42 der Aufnahmewand 41 gelegt wird und den Halterahmen 25 des Einbaugerätes und den Öffnungsrand 24 der Einbaudose 21 überdeckt. Sodann wird eine dem jeweiligen Einbaugerät entsprechende Abschlußplatte 26 aufgesetzt und mit dem Halterahmen 25 des Einbaugerätes verschraubt. Es sind dann nur noch die Anschluß-Leitungsstücke 16 hinter der Aufnahmewand 41 bzw. dem Inneren der Anschlußeinrichtung 10 an die dort geführten Leitungen anzuschließen.

Soll ein Einbaugerät entfernt und durch ein anderes Einbaugerät ersetzt werden, so sind zunächst die Anschluß-Leitungsstücke 16 von den jeweiligen Leitungen hinter der Aufnahmewand 41 bzw. im Inneren der Anschlußeinrichtung 10 zu lösen. Es sind dann die Haltenasen 28 an der Einbaudose 21 einwärts zu drücken, so daß die gesamte Einbaueinheit aus der Aufnahmeöffnung 14 der Aufnahmewand 41 herausgehoben werden kann. Wird ein mehrere Einbaueinheiten 20 umfassender gemeinsamer Abdeckrahmen 27 benutzt, so sind in diesem Fall zunächst alle mit diesem gemeinsamen Abdeckrahmen 27 zusammengesetzten Abschlußplatten 26 und der gemeinsame Abdeckrahmen 27 zu entfernen.

Bei dem in Figur 4 gezeigten Anwendungsbeispiel ist eine mittels einer Einbaudose 21 nach Figur 1 bis 3 gebildete Einbaueinheit 20 in einer 10 vorgesehen, deren Außenwand 11 der in Figur 3 gezeigten Aufnahmewand 41 entspricht und durch eine Profilschiene aus Metall, beispielsweise Aluminium, gebildet ist.

Bei dem in Figur 4 gezeigten Anwendungsbeispiel ist eine mittels einer Einbaudose 21 nach Fig. 1 bis 3 gebildete Einbaueinheit 20 in einer Anschlußeinrichtung 10 vorgesehen, deren Außenwand 11 der in Figur 3 gezeigten Aufnahmewand 41 entspricht und durch eine Profilschiene aus Metall, beispielsweise Aluminium, gebildet ist. Im Inneren dieser Profilschiene sind u.a. elektrische Leitungen 12 geführt, die je nach Ausrüstung der Anschlußeinrichtung 10 zu verschiedenen elektrischen Versorgungssystemen gehören. Diese elektrischen Leitungen 12 sind in einem Bereich im Inneren der Profilschiene gelagert und durch eine in innere Ausnehmungen der Profilschiene eingerastete, elektrisch isolierende Abdeckleiste 13 nach dem Inneren der Anschlußeinrichtung 10 abgedeckt. Im dargestellten Beispiel weist die durch die Profilschiene gebildete Außenwandung 11 der Anschlußeinrichtung 10 an der Unterseite Aufnahmeöffnungen 14 für Einbaugeräte 15 auf, beispielsweise eine Potentialausgleichdose (Fig. 1). Das jeweilige Einbaugerät 15 ist mittels Anschluß-Leitungsstücken 16 an die entsprechenden Versorgungsleitungen 12 und/oder an Masse angeschlossen. Im Beispiel der Potentialausgleichdose gemäß Figur 1 ist deren Anschluß-Leitungsstück 16 mittels einer Kontaktschraube 18 an ein Kanalprofilteil 17 der die Außenwand 11 bildenden Profilschiene elektrisch angeschlossen. Sofern Anschluß an die eine oder andere elektrische Versorgungsleitung 12 vorzunehmen ist, erfolgt dies mittels Kontaktklemmen 19.

Die das Einbaugerät 15 enthaltende Einbaueinheit 20 weist eine einstückige Einbaudose 21 mit Bodenwand 22 und Umfangswand 23 auf, in die das jeweilige Einbaugerät, beispielsweise eine potentialausgleichdose, eine Schutzkontaktsteckdose oder ein anderes der oben beispielshalber aufgeführten Einbaugeräte eingesetzt bzw. eingebaut ist. Dazu weist das Einbaugerät 15, beispielsweise die Potentialausgleichdose, einen Halterahmen 25 auf, an welchem das eigentliche Einbaugerät in herkömmlicher Weise befestigt ist. Dieser Halterahmen greift über den Öffnungsrand 24 der Einbaudose 21 (vergl. Figuren 2 bis 4) und auch über den Öffnungsrand der Aufnahmeöffnung 14 in der Außenwand 11 der Anschlußeinrichtung 10. In eingebautem Zustand der Einbaueinheit 20 ist das Einbaugerät 15, beispielsweise die Potentialausgleichdose, mit einer Abschlußplatte 26 abgedeckt, die den Zugriff bzw. den Betriebszugang zu dem jeweiligen Einbaugerät enthält. Diese äußere Abschlußplatte 26 kann einen zusätzlichen Abschlußrahmen 27 aufweisen, der den flanschartigen Rand des Halterahmens 22 überdeckt und umgibt und sich außerhalb des Halterahmens 25 auf die Außenfläche der Außenwand 11 legt, um einen saüberen und mehr oder weniger dichten Abschluß zu bilden.

Sofern im Unterschied zu den in der Zeichnung dargestellten Beispielen Einbaugeräte anderer als elektrischer Art vorgesehen sind, werden diese ebenso in die Einbaudose 21 eingebaut und mittels entsprechend anderer Anschluß-Leitungsstücke an entsprechende Ver- und Entsorgungsleitungen innerhalb der Anschlußeinrichtung 10 angeschlossen, beispielsweise an Sauerstoff oder andere gasförmige oder flüssige Medien führende Leitungen oder auch Vakuum- oder Absaugleitungen.

## Patentansprüche

1. Einbaudose für die Anbringung von Einbaugeräten (15), vorzugsweise Einbaugeräten elektrischer Art, hinter einer dünnen, plattenförmigen Aufnahmewand (41), wobei die Einbaudose (21) mit dem eingesetzten Einbaugerät (15) an der Sichtseite (42) der Aufnahmewand (41) mit einer den Zugriff zu dem Einbaugerät (15) enthaltenden, äußeren Abschlußplatte (26) abdeckbar sowie das Einbaugerät (15) an hinter der Aufnahmewand (41), beispielsweise hinter der Außenwand (11) einer kanalartigen Anschlußeinrichtung (10), verlegte Leitungen (12) anschließbar ist,
gekennzeichnet durch
Ausbildung der Einbaudose (21) zum Einführen von der Sichtseite (42) der Aufnahmewand (41) her in eine Aufnahmeöffnung (14) in der Aufnahmewand (41), vorzugsweise an der Unterseite und/oder Frontseite einer Anschlußeinrichtung (10), wobei die Einbaudose (21) an der jeweiligen Aufnahmewand (41) einrastbare Haltenasen (28) mit auf die Hinterseite (43) der Aufnahmewand (41) greifender Rast- und Abstützfläche (32) und einen mit einem Halterahmen überdeckbaren Öffnungsrand (24) aufweist, der zum Abstützen des Halterahmens (25) in festgelegtem Abstand (44) von der dem Öffnungsrand (24) zugewandten Rast- und Abstützfläche (32) der Haltenasen (28) ausgebildet ist.

2. Einbaudose nach Anspruch 1, dadurch gekennzeichnet, daß die Haltenasen (28) mit auswärts abgeschrägter Rast- und Abstützfläche (32) ausgebildet sind.

3. Einbaudose nach Anspruch 1 oder 2, dadurch gekennzeichnet, daß die Haltenasen (28) gegenüber dem Öffnungsrand (24) zum Dosenboden (22) hin zurückversetzt an der Umfangswand (23) angeordnet und am Öffnungsrand (24) den Haltenasen (28) gegenübergesetzte und sich unter den Halterahmen (25) des Einbaugerätes (15) legende Flanschteile (24a) angebracht sind, wobei zwischen diesen Flanschteilen (24a) und der Rast- und Abstützfläche (32) der Haltenasen (28) der in Betracht kommenden Dicke der Aufnahmrwand (41,11) entsprechender Abstand (44) gebildet ist.

4. Einbaudose nach Anspruch 3, dadurch gekennzeichnet, daß die Flanschteile (24a) sich - mit Aussparung der Bereiche der Haltenasen (28) - um den gesamten Öffnungsrand der Einbaudose (21) erstrecken.

5. Einbaudose nach Anspruch 3 oder 4, dadurch gekennzeichnet, daß die Flanschteile (24a) als auf einen Bruchteil der Umfangswand-Dicke verdünnte, nach außen vorstehende Randelemente an die Umfangswand (23) der Einbaudose (21) angeformt sind.

6. Einbaudose nach einem der Ansprüche 1 bis 5, dadurch gekennzeichnet, daß im Bodenbereich der Umfangswand (23) und/oder in der Bodenwand (22) ausbrechbare oder ausschneidbare Wandteile als vorbereitete Durchlaßöffnungen (33, 34) für Anschluß leitungen vorgesehen sind.

7. Einbaudose nach Anspruch 6, dadurch gekennzeichnet, daß die vorgebildeten Durchlaßöffnungen (33, 34) als auf einen Bruchteil der Wanddicke der Einbaudose (21) verdünnte Wandungsbereiche ausgebildet sind.

8. Einbaudose nach einem der Ansprüche 1 bis 7, dadurch gekennzeichnet, daß die Dosenwandung (23) mit polygonalem, vorzugsweise quadratischem oder rechteckigem, Querschnitt ausgebildet ist.

9. Einbaudose nach einem der Ansprüche 1 bis 8, dadurch gekennzeichnet, daß die Dosenwandung (23) einstückig mit ihren Haltenasen aus nachgiebigem Kunststoff, vorzugsweise flammwidrigem Polypropylen, geformt ist.

10. Einbaudose nach Anspruch 9, dadurch gekennzeichnet, daß an für Schraubverbindungen vorgesehenen Stellen der Einbaudose (21) vorbereitete, zum Einschrauben von Schraubenbolzen mit selbstschneidendem Gewinde ausgebildete Schraubverbindungslöcher (36) vorgesehen sind.

11. Einbaudose nach Anspruch 9, dadurch gekennzeichnet, daß an für Schraubverbindungen vorgesehenen Stellen der Einbaudose (21) Gewindebuchsen aus Metall beim Formen in die Wandung (23) eingelagert sind.

12. Einbaudose nach einem der Ansprüche 1 bis 11, dadurch gekennzeichnet, daß auf der Außenseite der Umfangswand (23) angeformte Führungs- und Klemmrippen (45) vorgesehen sind, die sich vom Öffnungsrand (24) her nach dem Dosenboden (22) hin zumindest über einen Teil der Dosentiefe (46) erstrecken.

13. Einrichtung für die Anbringung von Einbaugeräten (15), vorzugsweise Einbaugeräten elektrischer Art, in kanalartigen Anschlußeinrichtungen (10) für verschiedenartige Versorgungssysteme, unter Anwendung einer Einbaudose (21) nach einem der Ansprüche 1 bis 12, gekennzeichnet durch eine mit der Einbaudose (21) und einem Einbaugerät (15) gebildete Einbaueinheit (20), die in eine Aufnahmeöffnung in einer Außenwand (11), vorzugsweise an der Unterseite und/oder in der Frontwand, der Anschlußeinrichtung (10) von der Außenseite her einsetzbar ist und bei der die Einbaudose (21) an der Innenseite der jeweiligen Außenwand (11) einrastbare Haltenasen (28) aufweist und zumindest am Einbaugerät (15) ein über die Außenseite der jeweiligen Außenwand (11) der Anschlußeinrichtung (10) greifende Halterahmen (25) vorgesehen ist, der mit einer den äußeren Zugriff zum Einbaugerät (15) enthaltenden, äußeren Abdeckplatte (16) überdeckbar ist.

14. Einrichtung nach Anspruch 13, dadurch gekennzeichnet, daß die Einbaudose (21) und das Einbaugerät (15) zu einer Einbaueinheit (20) vormontiert sind, bei der Anschlußstücke (16) des Einbaugerätes (15) durch Öffnungen im Bodenbereich der Einbaudose (21) hindurchgeführt und an die in der Anschlußeinrichtung (10) verlegten Leitungen (12) anschließbar sind.

## Claims

1. Assembly box for the fitting of assembly devices (15) preferably assembly devices of electrical nature behind a thin plate-like receiving wall (41) whereby the assembly box (21) with the inserted assembly device (15) is covered on the visible side (42) of the receiving wall (41) with an outer closure plate (26) containing the grip to the assembly device (15) as well as the assembly device (15) connectable to leads (12) placed behind the receiving wall (41), for example, behind the outer wall (11) of a channel-like connection device (10), characterised by forming the assembly box (21) for introduction from the visible side (42) of the receiving wall (41) into a receiving opening (14) in the receiving wall (41) preferably on the underside and/or front side of a connection device (10) whereby the assembly box (21) has on the respective receiving wall (41) snap catch holding lugs (28) with catch and support face (32) engaging the rear side (43) of the receiving wall (41) and an opening edge (24) covering a holding frame which opening edge is formed for supporting the holding frame (25) at fixed distance (44) from the catch and support face (32) of the holding lugs (28) turned towards the opening edge (24).

2. Assembly box according to claim 1, characterised in that the holding lugs (28) are formed with catch and support face (32) bevelled outwards.

3. Assembly socket according to claim 1 or 2, characterised in that the holding lugs (28) are disposed on the peripheral wall (23) set back in respect of the opening edge (24) to the box bottom (22) and on the opening edge (24) placed opposite the holding lugs (28) flange parts (24a) lying under the holding frame (25) of the assembly device (15) are fitted whereby between these flange parts 24a) and the catch and support face (32) of the holding lugs (28) is formed the distance (44) corresponding to the thickness of the receiving wall (41, 11) in question.

4. Assembly box according to claim 3, characterised in that the flange parts (24a) - with recess of the areas of the holding lugs (28) - extend around the whole opening edge of the assembly box (21).

5. Assembly box according to claim 3 or 4, characterised in that the flange parts (24a) are formed on the peripheral wall (23) of the assembly box (21) as outwardly projecting edge elements thinned on a fraction of the peripheral wall thickness.

6. Assembly box according to one of the claims 1 to 5, characterised in that in the bottom area of the peripheral wall (23) and/or in the bottom wall (22), wall parts capable of being broken out or cut-out are provided as preprepared passage openings (33, 34) for connection leads.

7. Assembly box according to claim 6, characterised in that the preprepared passage openings (33, 34) are formed as wall areas thinned on a fraction of the all thickness of the assembly box (21).

8. Assembly box according to one of the claims 1 to 7, characterised in that the box wall (23) is formed with a polygonal, preferably square or rectangular cross section.

9. Assembly box according to one of the claims 1 to, characterised in that the box wall (23) is formed in one-piece with its holding lugs of flexible synthetic material, preferably flame resistant polypropylene.

10. Assembly box according to claim 9, characterised in that at places of the assembly box (21) provided for screw connections, preprepared screw connection holes (36) formed with self cutting thread for the screwing in of screw bolts are provided.

11. Assembly box according to claim 9, characterised in that at places of the assembly box (21) provided for screw connections screw socket made of metal are incorporated in the wall upon moulding.

12. Assembly box according to one of the claims 1 to 11, characterised in that guiding and clamping ribs (45) formed on the outside of the peripheral wall (23) are provided which extend from the opening edge (24) towards the box bottom (22) at least over a part of the box depth (46).

13. Means for the fitting of assembly devices (15), preferably assembly devices of an electrical nature in channel-like connection devices (10) for different kinds of supply systems, using an assembly box (21) according to one of the claims 1 to 12, characterised by an assembly unit (20) formed with the assembly box (21) and an assembly device (15), which is insertable preferably from the outside into a receiving opening in an outer wall (11) and/or in the front wall of the connection device (10) and in which the assembly box (21) has on the inside of the respective outer wall (11) snap-fit holding lugs (28) and is provided at least on the assembly device (15) with a holding frame (25) engaging over the outside of the respective outer wall (11) of the connection device (10), which is capable of being covered with an outer cover plate (16) containing the outer grip to the assembly device (15).

14. Means according to claim 13, characterised in that the assembly box (21) and the assembly device (15) are premounted to form an assembly unit (20) in which the connection peices (16) of the assembly device (15) are led through openings in the bottom area of the assembly box (21) and are connectable to the leads (12) placed in the connection device (10).

## Revendications

1. Boîte à encastrer pour la mise en place d'appareils encastrés (15), de préférence d'appareils encastrés de type électrique, derrière une paroi réceptrice mince en forme de plaque (41), la boîte à encastrer (21) contenant l'appareil encastré (15) pouvant être recouverte, du côté visible (42) de la paroi réceptrice (41), par une plaque terminale extérieure (26) comportant l'élément permettant de saisir l'appareil encastré (15), ce dernier pouvant être raccordé à des canalisations (12) posées derrière la paroi réceptrice (41), par exemple derrière la paroi extérieure (11) d'un dispositif de branchement (10) analogue à une gaine, caractérisée en ce que la boîte à encastrer (21) est conçue pour être introduite par le côté visible (42) de la paroi réceptrice (41) dans une ouverture de réception (14) de la paroi réceptrice (41), de préférence dans la face inférieure ou frontale, ou dans les deux, d'un dispositif de branchement (10), la boîte à encastrer (21) étant pourvue de becs de maintien (28) encliquetables sur la paroi réceptrice (41) considérée, qui présentent une surface (32) de verrouillage et d'appui qui agit sur la face arrière (43) de la paroi réceptrice (41), et présentant un rebord d'ouverture (24) pouvant être recouvert par un châssis (25), ce rebord (24) d'ouverture étant conçu pour que le châssis (25) s'y appuie, à une distance (44) déterminée de la surface (32) de verrouillage et d'appui des becs de maintien (28) située du côté du rebord (24) d'ouverture.

2. Boîte à encastrer suivant la revendication 1, caractérisée en ce que les becs de maintien (28) présentent une surface de verrouillage et d'appui (32) chanfreinée vers l'extérieur.

3. Boîte à encastrer suivant la revendication 1 ou 2, caractérisée en ce que les becs de maintien (28) sont placés sur la paroi périphérique (23) en position reculée vers le fond (22) de la boîte (21) par rapport au rebord (24) d'ouverture et que des éléments en brides (24a) se trouvent sur le rebord (24) de l'ouverture, en face des becs (28) de maintien, et qui se placent sous le châssis (25) de l'appareil encastré (15), avec, entre ces éléments en brides (24a) et la surface (32) de verrouillage et d'appui des becs (28) de maintien, un intervalle (44) correspondant à l'épaisseur entrant en ligne de compte de la paroi réceptrice (41, 11).

4. Boîte à encastrer suivant la revendication 3, caractérisée en ce que les éléments en brides (24a) s'étendent - à l'exception des zones des becs de maintien (28), où elles sont échancrées - sur la totalité du rebord d'ouverture (24) de la boîte à encastrer (21).

5. Boîte à encastrer suivant la revendication 3 ou 4, caractérisée en ce que les éléments en brides (24a) sont réalisés sous la forme d'éléments marginaux faisant saillie vers l'extérieur, dont l'épaisseur est réduite à une fraction de l'épaisseur de la paroi périphérique, et qui sont venus de moulage sur la paroi périphérique (23) de la boîte à encastrer (21).

6. Boîte à encastrer suivant l'une des revendications 1 à 5, caractérisée en ce que, dans la zone proche du fond de la paroi périphérique (23) ou dans le fond (22), ou dans les deux, se trouvent des éléments de paroi pouvant être défoncés ou découpés, et qui constituent des ouvertures de passage (33, 34) préparées pour les canalisations de branchement.

7. Boîte à encastrer suivant la revendication 6, caractérisée en ce que les ouvertures de passage préparées (33, 34) sont réalisées sous la forme de zones de la paroi dont l'épaisseur est réduite à une fraction de l'épaisseur de paroi de la boîte à encastrer (21).

8. Boîte à encastrer suivant l'une des revendications 1 à 7, caractérisée en ce que la paroi (23) de la boîte (21) est de section polygonale, de préférence carrée ou rectangulaire.

9. Boîte à encastrer suivant l'une des revendications 1 à 8, caractérisée en ce que la paroi (23) de la boîte (21) est moulée d'une pièce, avec ses becs de maintien (28), en matière plastique souple, de préférence du polypropylène ininflammable.

10. Boîte à encastrer suivant la revendication 9, caractérisée en ce que, en des points de la boîte à encastrer (21) prévus pour des assemblages vissés, se trouvent des trous (36) pour assemblages vissés destinés à visser des vis-tarauds cylindriques.

11. Boîte à encastrer suivant la revendication 9, caractérisée en ce que des douilles filetées en métal sont logées, lors du moulage, dans la paroi (23), en des points de la boîte à encastrer (21) prévus pour des assemblages vissés.

12. Boîte à encastrer suivant l'une des revendications 1 à 11, caractérisée en ce que la surface extérieure de la paroi périphérique (23) présente des nervures de guidage et de blocage (45) venues de moulage, qui s'étendent, depuis le rebord d'ouverture (24) en direction du fond (22) de la boîte à encastrer (21), au moins sur une partie de la profondeur (46) de la boîte à encastrer (21).

13. Dispositif de mise en place d'appareils encastrés (15), de préférence des appareils électriques, dans des dispositifs de branchement (10) analogues à des gaines, pour divers systèmes d'alimentation, avec utilisation d'une boîte à encastrer (21) suivant l'une des revendications 1 à 12, caractérisé en ce qu'il utilise une unité à encastrer (20) constituée par la boîte à encastrer (21) et un appareil à encastrer (15), unité à encastrer (20) qui peut être mise en place dans une ouverture réceptrice d'une paroi extérieure (11), de préférence sur la face inférieure ou dans la paroi frontale, ou les deux, du dispositif de branchement (10), depuis la face extérieure, et avec laquelle la boîte à encastrer (21) présente des becs (28) de maintien encliquetables sur la face intérieure de la paroi extérieure (11) considérée et il existe, au moins sur l'appareil à encastrer (15), un châssis (25) qui s'étend sur la face extérieure de la paroi extérieure (11) considérée du dispositif de branchement (10), ce châssis (25) pouvant être recouvert par une plaque de recouvrement (26) extérieure comportant l'élément qui permet de saisir de l'extérieur l'appareil incorporé (15).

14. Dispositif suivant la revendication 13, caractérisé on ce que la boîte à encastrer (21) et l'appareil à encastrer (15) sont montés à l'avance pour constituer une unité à encastrer (20) sur laquelle des tronçons de branchement (16) de l'appareil à encastrer (15) passent par des ouvertures pratiquées dans la zone proche du fond de ta boîte à encastrer (21) et peuvent être branchés aux canalisations (12) posées dans le dispositif de branchement (10).
